# NEUE EUROPÄISCHE PATENTSCHRIFT

(11) **EP 3 074 236 B2**
(45) Veröffentlichungstag und Bekanntmachung des Hinweises auf die Entscheidung über den Einspruch: **28.08.2024**
(45) Hinweis auf die Patenterteilung: 17.01.2018
(21) Anmeldenummer: 14805269.9
(22) Anmeldetag: 28.11.2014
(51) Int. Cl.: B42D 25/29, B42D 25/328, B42D 25/425, G03H 1/00

(54) **VERFAHREN ZUR HERSTELLUNG EINER OBJEKTMARKIERUNG ZUR OPTISCHEN AUTHENTIFIZIERUNG**
METHOD FOR PRODUCING AN OBJECT MARKING FOR OPTICAL AUTHENTICATION
PROCÉDÉ DE FABRICATION D'UN MARQUAGE D'OBJET POUR L'AUTHENTIFICATION OPTIQUE

(30) Priorität: 28.11.2013 EP 13194863
(43) Veröffentlichungstag der Anmeldung: 05.10.2016
(73) Patentinhaber: Authentic Vision GmbH, 5020 Salzburg (AT)
(72) Erfinder: WEIß, Thomas, A-5020 Salzburg (AT)
(74) Vertreter: SONN Patentanwälte GmbH & Co KG
(86) Internationale Anmeldenummer: PCT/EP2014/075916
(87) Internationale Veröffentlichungsnummer: WO 2015/079014

(56) Entgegenhaltungen:
- EP-A1- 0 644 508
- EP-A1- 2 293 261
- EP-A2- 1 132 862
- EP-A2- 2 075 114
- EP-A2- 2 461 307
- WO-A1-02/50790
- WO-A1-2010/001203
- WO-A1-2012/131239
- WO-A1-2013/188897
- WO-A1-2014/184188
- WO-A1-93/12506
- WO-A1-99/17486
- WO-A2-2004/070667
- WO-A2-2008/011108
- WO-A2-2012/177845
- CN-A- 1 111 021
- FR-A1- 2 977 051
- GB-A- 2 129 739
- US-A1- 2002 080 221
- US-A1- 2004 112 962
- US-A1- 2009 074 231
- US-B2- 8 090 952

## Beschreibung

Die Erfindung betrifft ein Verfahren zur Herstellung einer Objektmarkierung zur optischen Authentifizierung eines Objekts, wobei zumindest ein Ausschnitt eines Materialstücks eines Basismaterials variabel und willkürlich bzw. zufällig festgelegt wird und mit dem zumindest einen Ausschnitt eine Objektmarkierung hergestellt wird.

Produktfälschungen werden zunehmend ein Problem. Abhilfe hierfür schaffen Systeme, welche die Authentifizierung eines Objekts, speziell eines Produkts, erlauben. Diese Systeme weisen in der Regel jedem Objekt eine eindeutige Seriennummer zu und speichern diese gemeinsam mit Objekteigenschaften ähnlich einem Fingerabdruck bei Menschen ab. Dementsprechend ist mit Authentifizierung in diesem Zusammenhang die Überprüfung der Echtheit eines Produkts bzw. allgemeiner eines beliebigen Objekts gemeint, insbesondere hinsichtlich der Frage, ob es sich bei dem Produkt um eine Produktfälschung handelt oder nicht. Dabei werden im Allgemeinen bestimmte Unterscheidungsmerkmale des Objekts identifiziert und überprüft, indem sie mit den, z.B. gespeicherten, Merkmalen eines echten Objekts verglichen werden. Fehlen den zu authentifizierenden Objekten die entsprechenden Unterscheidungsmerkmale, können diese künstlich hinzugefügt werden. Der Hauptzweck einer Objektmarkierung im Sinne der Erfindung ist dementsprechend das Hinzufügen von zusätzlichen Unterscheidungsmerkmalen zu dem Objekt, welche bei der Authentifizierung berücksichtigt werden können und deren Zuverlässigkeit erhöhen.

Um eine Objekteigenschaft vor dem Kopieren zu schützen, verwenden bekannte Lösungen mikroskopische Eigenschaften wie Oberflächenstrukturen oder Verfärbungen von Fasern (Verweis). Dies geht soweit, dass Objekte mit einer speziellen DNA markiert werden. Nachteil dieser Lösungen ist, dass diese Eigenschaften lediglich mit speziellem Equipment, jedenfalls aber nicht mit handelsüblichen digitalen Kameras, auslesbar sind. Der Grund für die durch die Verwendung derartiger physikalischer Eigenschaften erzielte Fälschungssicherheit liegt in der stochastischen Natur der genannten Eigenschaften, d.h. diese sind praktisch nicht reproduzierbar.

Eine derartige Objektmarkierung ist bereits aus der US 8,090,952 B2 bekannt, welche eine eindeutige, mittels eines Smartphones verifizierbare Produktmarkierung beschreibt. Die Produktmarkierung bzw. ein Abschnitt der Produktmarkierung wird durch einen zufällig gewählten Ausschnitt eines sich wiederholenden Musters gebildet. Als zusätzliches Sicherheitsmerkmal kann ein Aufkleber an einer zufällig gewählten Position im Abschnitt angeordnet sein, wobei der Aufkleber auch ein Hologramm aufweisen kann. Da sowohl das sich wiederholende Muster an sich als auch der Inhalt des Aufklebers festgelegt ist, kann eine derartige Produktmarkierung bereits mit relativ geringem Aufwand reproduziert werden. Da der Aufkleber abgesehen von der Anordnung keine zufälligen Elemente aufweist und somit nur einmal analysiert werden muss, genügt eine einfache Fotokopie der Anordnung, um den Ausschnitt des Musters und die Position des Aufklebers duplizieren zu können.

Weiters beschreibt die WO 2004/070667 A2 die Herstellung eines Sicherheitskennzeichens auf Basis eines Zufallsmusters, welches seinerseits auf Basis eines zufälligen physikalischen Prozesses erstellt wird. Zwar kann hierdurch eine ungleich größere Anzahl an zufälligen und somit eindeutigen Unterscheidungsmerkmalen in die Produktmarkierung eingebettet werden; diese sind jedoch ebenfalls mittels einer einfachen Fotokopie vollständig erfassbar und somit - wenn auch mit erhöhtem Aufwand - duplizierbar.

Die US 2002/0080221 A1 beschreibt ein digitales Heiß-Prägesystem, welches sich zur Aufbringung von Sicherheitsmerkmalen, wie beispielsweise Hologrammen, in frei wählbaren Formen eignet. Die Formen können zwar angeblich "zufällig" gewählt werden, allerdings ist nicht offenbart, wie dieser "Zufall" erzielt wird und es ist davon auszugehen, dass es sich hierbei um einen digitalen und daher deterministischen "Zufall" handelt, welcher dementsprechend digital replizierbar ist. Aufgrund der Struktur des verwendeten vorgedruckten Musters kann das Sicherheitsmerkmal bereits ausgehend von einem einzigen Original vollständig analysiert und folglich auch reproduziert werden. Darüber hinaus ist die Anordnung und Ausrichtung des Sicherheitsmerkmals durch das vorgedruckte Muster festgelegt und somit vorhersehbar.

Die EP 2 461 307 A2 zeigt ein Verfahren zur Herstellung von Markierungen zur Identifikation und zum Nachweis der Authentizität von Produkten. Die einzelnen Markierungen werden mittels eines Schneidwerkzeugs aus einem Bogen holografisch belichteten Materials gestanzt.

Die EP 2 075 114 A2 beschreibt ein Verfahren, bei der Etiketten, auf denen z.B. Hologramme als primäre Identifikationsmerkmale angeordnet sind, in individuellen Formen durch Schneiden oder Stanzen aus einer Etikettbahn ausgebildet werden. Die konkrete individuelle Form wird dabei von einem computergesteuerten System vorgegeben und ist somit reproduzierbar.

Schließlich zeigt die WO 2010/001203 A1 ein Verfahren zur Herstellung von Markierungen zum Schutz vor Fälschungen, welche mittels Handykamera verifizierbar sind. Dabei wird ein mit einem periodischen Muster versehener Bogen in eine Vielzahl von identischen Ausschnitten zerschnitten, d.h. die Abmessungen der Ausschnitte entsprechen genau der Periode des Musters.

Es ist Aufgabe der Erfindung, ein Verfahren zur Herstellung einer Objektmarkierung vorzusehen, welche einerseits durch ein handelsübliches programmierbares Gerät mit eingebauter Kamera (z.B. ein Smartphone) überprüft werden kann und zugleich weder durch eine genügend hochauflösende zweidimensionale Farbkopie noch mit Hilfe identischer Produktionsressourcen replizier- bzw. fälschbar ist.

Die Erfindung löst diese Aufgabe dadurch, dass bei einem Verfahren der eingangs angeführten Art das Basismaterial des Materialstücks ein periodisch wiederkehrendes Muster von Sicherheitsmerkmalen (d.h. eine periodische Folge von Sicherheitsmerkmalen) mit vom Betrachtungswinkel abhängigen optischen Eigenschaften aufweist, dessen Periode (welche einer Periode der Folge von Sicherheitsmerkmalen entsprechen) größer als die Abmessungen des Ausschnitts, insbesondere größer als die Abmessungen der Objektmarkierung, ist, sodass jeder Ausschnitt einzigartig ist und nur einen Teil des Musters von Sicherheitsmerkmalen aufweist. Der Ausschnitt kann insbesondere auch kleinere Abmessungen als das Materialstück aufweisen, so dass die Entnahme eines Ausschnitts nicht zwingend auch zu einer Durchtrennung des Materialstücks führen muss. Dabei kann der Ausschnitt beispielsweise durch Abtrennung, z.B. mittels Ausschneiden oder Ausstanzen, oder aber durch Ablösung, etwa mit Hilfe eines Prägeverfahrens, hergestellt werden. Wesentlich für die Sicherheit der Erfindung ist - zusammen mit dem Verhältnis der Abmessungen - die willkürliche bzw. zufällige Festlegung des Ausschnitts, d.h. der Ausschnitt wird im Rahmen eines zufälligen Prozesses festgelegt. Mit "zufällig" ist in diesem Zusammenhang die Abhängigkeit von einem echten Zufall, wie er z.B. bei stochastischen physikalischen Prozessen auftritt, gemeint. Im Gegensatz zum Pseudo-Zufall, welcher zumeist durch spezielle deterministische Algorithmen mit Hilfe eines Computer bereitgestellt wird, ist ein solcher "echter" Zufall nicht reproduzierbar und nicht vorhersagbar. Als Sicherheitsmerkmale werden in diesem Zusammenhang jene Merkmale eines Materials bzw. des Basismaterials verstanden, welche vom Betrachtungswinkel abhängige optische Eigenschaften aufweisen, so dass anhand einer zweidimensionalen Kopie nicht alle vorhandenen optischen Eigenschaften nachgebildet werden können. Typische Sicherheitsmerkmale sind beispielsweise Wasserzeichen, eine spezielle Papierqualität, spezielle dreidimensionale Drucktechniken, Sicherheitsfäden, Druckelemente mit Kippeffekt, optisch variable Farben bzw. generell optisch variable Merkmale, z.B. in Form von Kinegrammen, Hologrammen oder Mustern, Zeichen und Formen, welche nur unter einem bestimmten Betrachtungswinkel erkennbar sind bzw. deren Farbgebung ändern, sowie Kombinationen der genannten Techniken. Selbstverständlich kann das Basismaterial auch mehrere gleichartige oder ähnliche Sicherheitsmerkmale sowie beliebige Kombinationen gleichartiger und verschiedenartiger Sicherheitsmerkmale aufweisen. Derartige Sicherheitsmerkmale können bei vollständiger Kenntnis zumindest bis zu einem solchen Grad repliziert werden, dass das Replikat einer Überprüfung mittels einer - verhältnismäßig grob auflösenden - Kamera standhält. Die Objektmarkierung erschwert jedoch eine Replizierung zusätzlich, indem die einzelne Objektmarkierung nur einen kleinen Teil der Sicherheitsmerkmale des Basismaterials offenbart. Da dieser Teil zufällig gewählt ist, ist die Anzahl der für eine Replikation des Basismaterials zu analysierenden Objektmarkierung nicht vorhersehbar: Unter Umständen sind selbst bei Vorliegen aller hergestellten Objektmarkierungen nicht alle Sicherheitsmerkmale des Basismaterials offenbart und eine Nachahmung des Herstellungsverfahrens daher nicht möglich. Anhand einer einzelnen Objektmarkierung kann noch nicht einmal die Periodizität des Sicherheitsmerkmals bzw. der Folge von Sicherheitsmerkmalen abgeleitet werden. Andererseits kann bei einer Zusammenschau mehrerer Objektmarkierungen nicht mit Sicherheit rekonstruiert werden, ob die jeweiligen Ausschnitte aus dem gleichen Basismaterial entnommen sind, d.h. es gibt keine zuverlässige Methode, das Basismaterial zu rekonstruieren. Bei der vorliegenden Erfindung wird somit die Sicherheit vor Kopien, welche ansonsten mit Hilfe identischer Produktionsressourcen angefertigt werden könnten, durch den Einsatz eines zufälligen Herstellungsprozesses erreicht. Hierdurch ist selbst mit dem Wissen und den Produktionsressourcen des Urhebers bzw. des Original-Herstellers keine gezielte Herstellung zweier Objekte mit identischen Eigenschaften möglich.

Es ist ein Set mit einer Mehrzahl von Objektmarkierungen der eingangs angeführten Art offenbart, bei denen das Basismaterial des Materialstücks ein periodisch wiederkehrendes Muster von Sicherheitsmerkmalen mit vom Betrachtungswinkel abhängigen optischen Eigenschaften aufweist, dessen Periode größer als die Abmessungen des Ausschnitts, insbesondere größer als die Abmessungen der Objektmarkierung, ist, sodass jeder Ausschnitt nur einen Teil des Musters von Sicherheitsmerkmalen aufweist und sodass sich der Ausschnitt bzw. die Ausschnitte jeder einzelnen Objektmarkierung von den Ausschnitten aller übrigen Objektmarkierungen unterscheidet bzw. unterscheiden, wobei insbesondere jeder Ausschnitt von jedem anderen Ausschnitt statistisch unabhängig ist. Dies trifft insbesondere selbst dann zu, wenn sämtliche Ausschnitte aus dem gleichen Basismaterial entnommen sind. In diesem Fall lässt sich grundsätzlich anhand einer genügend großen Anzahl (abhängig vom der Größe des Ausschnitts im Verhältnis zur Periode) die Periodizität der Folge an Sicherheitsmerkmalen des Basismaterials erkennen, was jedoch nicht bedeutet, dass anhand derselben Anzahl das Basismaterial vollständig rekonstruiert werden könne. Darüber hinaus ist es vorteilhaft, wenn jeder Ausschnitt von jedem anderen Ausschnitt statistisch unabhängig ist. Demgegenüber würde eine signifikante statistische Abhängigkeit bzw. Korrelation auf deterministisch festgelegte Ausschnitte hindeuten, welche somit vorhersagbar und in letzter Konsequenz fälschbar wären.

Die nachfolgend angeführten Verbesserungen bzw. die damit verbundenen Vorteile treffen in diesem Sinne sowohl auf das Verfahren zur Herstellung einer Objektmarkierung als auch auf ein Set von Objektmarkierungen zu.

Aufgrund des hohen Aufwands einer Replikation im Vergleich zu den Herstellungskosten ist es besonders vorteilhaft, wenn das Sicherheitsmerkmal des Basismaterials ein optisch variables Merkmal, d.h. ein Material mit vom Betrachtungswinkel abhängigen Eigenschaften, insbesondere ein Hologramm, ist.

Weiters ist es günstig, wenn das Sicherheitsmerkmal bzw. dessen optische Eigenschaften Abmessungen aufweist, welche mindestens dem Auflösungsvermögen des menschlichen Auges, insbesondere dem Auflösungsvermögen handelsüblicher Kameras, entsprechen, sodass das Sicherheitsmerkmal mit einer handelsüblichen Kamera auslesbar und verifizierbar ist. Im Fall von Abmessungen, welche mindestens dem Auflösungsvermögen des menschlichen Auges entsprechen, kann das Sicherheitsmerkmal auch durch direkten Vergleich z.B. mit mehreren vereinfachenden Abbildungen überprüft werden. Abhängig von der verwendeten Kameratechnik kann z.B. eine minimale Abmessung von 100 µm vorgesehen sein. Grundsätzlich soll das Sicherheitsmerkmal mit einer handelsüblichen Kamera ohne nachträglicher Erweiterung bzw. Veränderung der Optik auslesbar und verifizierbar sein, sodass dieses Merkmal bei einer automatischen Überprüfung mit einbezogen werden kann. Insbesondere können in diesem Fall die so verifizierbaren Merkmale bzw. Eigenschaften nicht nur zur Verifikation sondern auch zur Identifikation der Objektmarkierung verwendet werden, d.h. die Identität der Objektmarkierung kann anhand der aufgenommenen Sicherheitsmerkmale bzw. deren optischen Eigenschaften (welche, wie oben ausgeführt, einen zufällig festgelegten Teil der Sicherheitsmerkmale des Basismaterials abbilden) ermittelt werden. Dabei muss nicht notwendiger Weise immer der gesamte Ausschnitt auf einmal erfassbar bzw. auslesbar sein, sondern es kann auch eine Authentifizierung anhand eines oder mehrerer Teilbereiche der Objektmarkierung, welcher im Allgemeinen nicht alle Ausschnitte vollständig enthält, erlaubt werden.

Ein nicht deterministischer und zugleich einfach zu generierender Beitrag zur zufälligen Auswahl des Ausschnitts kann dadurch erzielt werden, indem das Materialstück in Form eines Bandes ausgebildet ist und durch einen zufälligen bzw. nicht gesteuerten, bevorzugt von der Periode des periodisch wiederkehrenden Musters des Basismaterials abweichenden, Vorlauf des Bandes eine Stelle des Bandes ausgewählt wird und der Ausschnitt bezogen auf die ausgewählte Stelle festgelegt wird.

Weiters ist es für die Auswahl der Sicherheitsmerkmale vorteilhaft, wenn der Ausschnitt durch eine variable, zufällige Auswahlmaske festgelegt wird, wobei der Ausschnitt entweder entsprechend einem durch die Auswahlmaske maskierten Bereich des Materialstücks oder entsprechend einem durch die Auswahlmaske unmaskierten bzw. freigelassenen Bereich des Materialstücks festgelegt wird. Durch die Auswahlmaske kann der durch eine einzelne Objektmarkierung offenbarte Anteil an den Sicherheitsmerkmalen des Basismaterials noch flexibler festgelegt und zudem verkleinert werden.

Die variable Auswahlmaske kann bevorzugt in Form einer partiellen Abdeckung auf das Materialstück aufgebracht werden, insbesondere in Form einer stellen- bzw. gebietsweise aufgebrachten Schicht. Eine solche Abdeckung kann einen Teil der im Ausschnitt enthaltenen Sicherheitsmerkmale selektiv abdecken und somit ausblenden. Außerdem kann die Abdeckung durch physikalisch zufällige bzw. chaotische Prozesse aufgebracht werden, sodass die Auswahlmaske zur Zufälligkeit, d.h. zum Nichtdeterminismus, der Auswahl der zur Authentifizierung verwendeten Sicherheitsmerkmale beiträgt. Dabei ist es unerheblich, ob die Abdeckung über den Ausschnitt hinaus geht oder nur innerhalb der Grenzen des Ausschnitts aufgebracht wird.

Die Vielfalt der mit dem Verfahren erzielbaren Variationen von Objektmarkierungen kann weiter vergrößert werden, wenn vor der Herstellung der Objektmarkierung, vorzugsweise noch vor der Festlegung des Ausschnitts, zumindest ein willkürlich bzw. zufällig festgelegter Teil des Materialstücks entnommen wird. Der entnommene Teil kann dementsprechend nicht mehr Teil der betreffenden Objektmarkierung sein.

Es ist weiters besonders vorteilhaft, wenn zumindest ein weiterer Ausschnitt desselben Materialstücks oder eines weiteren Materialstücks des Basismaterials willkürlich bzw. zufällig festgelegt wird und die Objektmarkierung mit den zumindest zwei Ausschnitten hergestellt wird. Hierbei bilden nicht nur die Eigenschaften der beiden separaten Ausschnitte sondern auch deren relative Anordnung, welche bevorzugt zufällig gewählt ist, einen Teil der zur Authentifizierung der Objektmarkierung verwendeten Merkmale. Im Allgemeinen können dabei auch teilweise oder vollständige Überlagerungen der Ausschnitte auftreten, was auch durchaus gewollt ist.

In diesem Zusammenhang kann zudem ein physikalischer Zufall der Anordnung dadurch eingeführt werden, dass die zumindest zwei Ausschnitte mit einer zumindest vorübergehend flüssigen oder pastösen Trägermasse vermengt werden. Dabei wird nicht nur die zweidimensionale Anordnung sondern die dreidimensionale Anordnung der Ausschnitte variiert und zufällig festgelegt, so dass die Ausschnitte unter verschiedenen Betrachtungswinkeln angeordnet sind und - im Fall von optisch variablen Merkmalen - eine selbst beim Basismaterial nicht vorhandene Kombination von optischen Merkmalen aufweisen können. Dementsprechend ist bei der Objektmarkierung günstiger Weise der Ausschnitt zusammen mit zumindest einem weiteren variablen, vorzugsweise zufälligen, Ausschnitt eines Materialstücks des Basismaterials in einer zumindest vorübergehend flüssigen oder pastösen Trägermasse angeordnet.

Wenn die Trägermasse zur Herstellung der Objektmarkierung direkt auf das Objekt aufgebracht wird, wird das markierte Objekt zum untrennbaren Teil der Objektmarkierung, da es als Träger für die selbst nicht formstabile Trägermasse dient, so dass ein Ablösen der Trägermasse zur Zerstörung der Objektmarkierung führt. Demgemäß kann bei einem Objekt mit einer entsprechenden Objektmarkierung die Trägermasse mit den Ausschnitten zur Bildung der Objektmarkierung direkt auf das Objekt aufgebracht sein oder einen Bestandteil des Objekts bilden.

Alternativ kann auch eine Folie aus der Trägermasse hergestellt werden, mit welcher Folie anschließend die Objektmarkierung hergestellt wird. Dies hat den Vorteil, dass auch Objekte, welche selbst keine ausreichende Formstabilität aufweisen (z.B. elastische Stoffe o.ä.), markiert werden können, ohne dass die zweckmäßige Verwendung des Objekts die Objektmarkierung zerstören würde. Dementsprechend kann zur Bildung der Objektmarkierung die Trägermasse mit den Ausschnitten zu einer Folie verarbeitet sein.

Als dritte Möglichkeit hat es sich als vorteilhaft herausgestellt, wenn der zumindest eine Ausschnitt zur Herstellung der Objektmarkierung auf ein Trägermaterial aufgebracht wird. Das Trägermaterial kann insbesondere eine Bahn oder ein Bogen eines flächigen Werkstoffs, z.B. Papier oder eine Folie, sein. Dabei kann aufgrund weiterer stochastischer Prozesse im Herstellungsprozess, z.B. durch minimal unterschiedliche Vorlaufgeschwindigkeiten des Ausschnitts bzw. des Basismaterials einerseits und des Trägermaterials andererseits in einer Serienproduktion bedingt, die Position des Ausschnitts innerhalb der Objektmarkierung individuell und zufällig variieren, weshalb eine so erzielte Positionierungsungenauigkeit des Ausschnitts innerhalb der Objektmarkierung ebenfalls einem "echten" Zufall entspricht und ausgewertet werden kann und so zur Sicherheit der Objektmarkierung beiträgt. Insbesondere bei der Serienproduktion - und dem damit verbundenen akkumulierten Effekt z.B. von Ungenauigkeiten in der Vorlaufgeschwindigkeitssynchronisation - kann so selbst bei vorliegendem Basismaterial und Auswahlvorschrift - keine Serie mit identischen Objektmarkierungen produziert werden.

Die beschriebenen Herstellungsvarianten, d.h. wobei die Objektmarkierung eine Trägermasse oder ein Trägermaterial umfasst, haben den Vorteil, dass durch die zusätzlichen stochastischen physikalischen Prozesse im Zuge der Verbindung des Ausschnitts mit der Trägermasse bzw. dem Trägermaterial individuell abweichende Objektmarkierungen selbst in dem unwahrscheinlichen Fall erzielt werden, dass ein Ausschnitt zweimal mit einer bestimmten Auswahlmaske an der gleichen Stelle des Sicherheitsmerkmals entnommen und auf das Trägermaterial aufgebracht bzw. in die Trägermasse eingebracht wird.

Weiters ist es günstig, wenn dasselbe Materialstück bzw. zumindest ein weiterer Ausschnitt des Materialstücks zur Herstellung zumindest einer weiteren Objektmarkierung verwendet wird. D.h. es wird zur Herstellung eines ersten Ausschnitts nur ein ausgewählter Teil des Basismaterials aus bzw. von dem Materialstück entnommen und das übrige Material, welches nicht dem Ausschnitt angehört, bleibt Teil des Materialstücks, welches somit weiterverwendet werden kann. Durch diese mehrfache bzw. mehrmalige Verwendung eines Materialstücks, d.h. ein und desselben Materialstücks, zur Herstellung mehrerer separater Objektmarkierungen, insbesondere für unterschiedliche Objekte, kann einerseits die Menge an benötigtem Basismaterial effizient eingesetzt werden und andererseits beeinflussen alle bereits entnommenen Ausschnitte den der betreffenden Objektmarkierung zugeordneten Ausschnitt, so dass die Reproduzierbarkeit weiter verringert wird. Außerdem können in diesem Fall nacheinander entnommene Ausschnitte nicht oder kaum zur Rekonstruktion des Basismaterials herangezogen werden, da in diesem Fall naturgemäß keine Überlappungen der Ausschnitte offenbart werden.

Darüber hinaus können der Objektmarkierung weitere Authentifizierungsmerkmale hinzugefügt werden, wenn die Objektmarkierung mit dem Objekt verbunden wird, wobei die Objektmarkierung bezüglich des Objekts bzw. einer am Objekt angebrachten Orientierungsmarke variabel und zufällig angeordnet wird. Insbesondere kann der Ausschnitt bzw. können die Ausschnitte in einer variabel festgelegten oder durch Produktionstoleranzen bedingten zufälligen Anordnung mit einem Objekt verbunden werden, sodass die Anordnung relativ zum Objekt bzw. zu einer am Objekt vorgesehenen Orientierungsmarkierung einen Teil der Objektmarkierung bildet. In diesem Zusammenhang kann mit einem Objekt eine entsprechende Objektmarkierung verbunden sein, wobei die Objektmarkierung bezüglich des Objekts bzw. einer am Objekt angebrachten Orientierungsmarke variabel, insbesondere durch Produktionstoleranzen bedingt, zufällig angeordnet ist.

Außerdem ist es in diesem Zusammenhang besonders günstig, wenn die durch die zufällige Anordnung der Objektmarkierung entstehenden Eigenschaften mit einer handelsüblichen Kamera feststellbar und auslesbar sind. In diesem Fall können die jeweiligen Eigenschaften bei einer elektronischen Überprüfung der Objektmarkierung berücksichtigt werden.

Die Erfindung betrifft auch insbesondere eine Anwendung der beschriebenen Objektmarkierung im Zusammenhang mit einem Verfahren bzw. System zur eindeutigen Kennzeichnung eines Objekts, wie in der vorangehenden PCT-Anmeldung mit dem Aktenzeichen PCT/AT2013/050121 beschrieben, wobei einzigartige Merkmale digitalisiert und mit einem privaten Schlüssel signiert werden und die einzigartigen Merkmale selbst zusätzlich zur Signatur der digitalisierten Merkmale am Objekt oder einer Verpackung des Objekts angeordnet oder durch zumindest einen Teil des Objekts oder dessen Verpackung gebildet werden, und die Authentizität des Objekts durch Vergleich der einzigartigen Merkmale mit der mit einem öffentlichen Schlüssel entschlüsselten, am Objekt oder dessen Verpackung angeordneten Signatur der digitalisierten Merkmale festgestellt wird. Zur Schaffung eines sicheren und einfach und kostengünstig implementierbaren Verfahrens werden dabei die einzigartigen Merkmale durch optisch erfassbare dreidimensionale Strukturen oder Materialien mit in Abhängigkeit des Betrachtungswinkels unterschiedlichen optischen Eigenschaften gebildet, und die digitalisierten Merkmale mit Hilfe eines Algorithmus, welcher auf zumindest zwei mit zumindest einer digitalen Kamera aufgenommenen digitalen Aufnahmen der einzigartigen Merkmale angewendet wird, erzeugt.

Die Erfindung wird nachfolgend anhand von besonders bevorzugten Ausführungsbeispielen, auf die sie jedoch nicht beschränkt sein soll, und unter Bezugnahme auf die Zeichnung noch weiter erläutert. In den Zeichnungen zeigen dabei im Einzelnen:
Fig. 1 schematisch ein Materialstück eines Basismaterials mit vom Betrachtungswinkel abhängigen optischen Eigenschaften;
Fig. 2 schematisch eine Reihe von Beispielen für Materialstücke verschiedener Basismaterialien unter verschiedenen Betrachtungswinkeln;
Fig. 3 schematisch die Auswahl eines Ausschnitts eines Materialstücks gemäß Fig. 2 zur Herstellung einer Objektmarkierung;
Fig. 4 schematisch drei hintereinander ausgewählte Ausschnitte eines Materialstücks gemäß einem zufälligen Vorlauf;
Fig. 5 zum Vergleich schematisch drei hintereinander ausgewählte Ausschnitte eines Materialstücks gemäß einem konstanten Vorlauf;
Fig. 6 schematisch eine Periode eines Sicherheitsmerkmals eines Materialstücks;
Fig. 7 schematisch die Anwendung verschiedener Auswahlmasken auf ein und dieselbe Auswahl des Materialstücks zur Herstellung unterschiedlicher Objektmarkierungen;
Fig. 8 schematisch die Kombination der gemäß verschiedener Auswahlmasken festgelegten Ausschnitte dreier Materialstücke zu einer Objektmarkierung; und
Fig. 9 schematisch eine Zerstückelung mehrerer Materialstücke und die Kombination von Ausschnitten in Form von Stücken jedes Materialstücks zu einer Objektmarkierung.

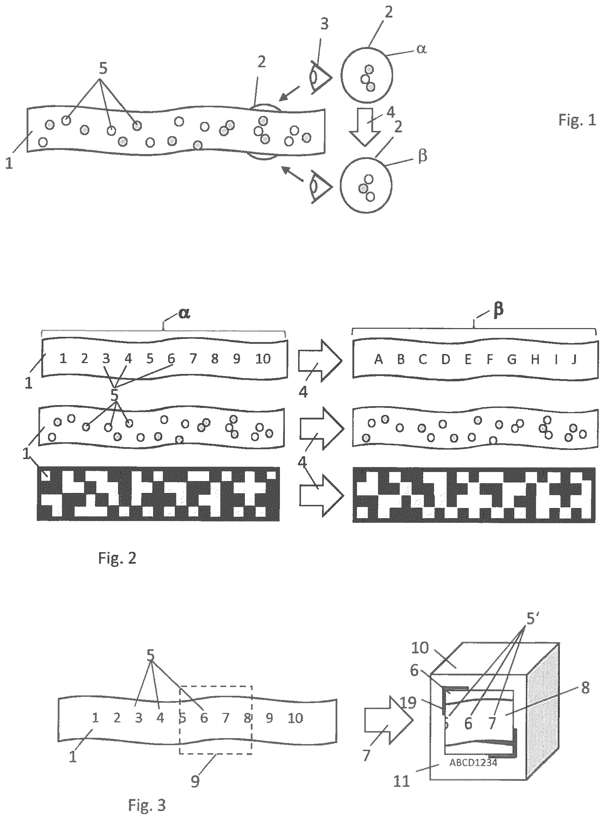

In Fig. 1 ist ein Materialstück 1 eines Basismaterials gezeigt, wobei ein Bereich 2 des Materialstücks 1 einmal gemäß seinem Erscheinungsbild wie unter einem ersten Blickwinkel α (durch das Auge 3 des Betrachters schematisch angedeutet) und einmal gemäß seinem Erscheinungsbild wie unter einem zweiten Blickwinkel β dargestellt ist. Der Pfeil 4 deutet schematisch eine Änderung des Betrachtungswinkels zwischen den Darstellungen α, β an (vgl. Fig. 2). Auf dem Materialstück 1 sind zum Schutz vor zweidimensionalen Kopien eine Vielzahl von Sicherheitsmerkmalen 5 angeordnet, welche jeweils unter verschiedenen Blickwinkeln α, β unterschiedliche Erscheinungsbilder bzw. allgemeiner unterschiedliche optische Eigenschaften aufweisen. Die Sicherheitsmerkmale 5 können beispielsweise maschinell auslesbaren Mustern oder Zeichen entsprechen. Eine Änderung 4 des Betrachtungswinkels auf das Materialstück 1 bedingt also beispielsweise eine Änderung der dargestellten Muster bzw. Zeichen, deren Farbgebung und/oder deren Sichtbarkeit.

Um die Auswertung mit Hilfe eines handelsüblichen programmierbaren Geräts, wie beispielsweise einem Smartphone, zu ermöglichen, müssen die optischen Eigenschaften wie Muster bzw. Zeichen gewisse Eigenschaften aufweisen. Sie müssen etwa eine minimale Größe von 100 µm x 100 µm aufweisen. Zudem wird für die computergestützte Bildverarbeitung ein ausreichend hoher Kontrast zwischen den Eigenschaften und deren Hintergrund benötigt. Dieser kann sich durch Unterschiede in der Helligkeit, vorteilhafter Weise jedoch in deren Farbgebung oder anderen optischen Eigenschaften, ausdrücken. Die verwendeten Muster können unterschiedlichste Ausprägungen aufweisen, wie in Fig. 2 dargestellt. So sind geometrische Figuren ebenso geeignet wie die Darstellung unterschiedlicher Zeichen. Beispiele für derartige Basismaterialien sind Materialien mit Hologrammen, Lentikular-Materialien, Sägezahnfolien oder Folien zur Einschränkung des Betrachtungswinkels.

Fig. 3 zeigt die Herstellung einer Objektmarkierung 6 durch die Aufbringung 7 eines Ausschnitts 8 gemäß einem ausgewählten Bereich 9 des Materialstücks 1. Der Ausschnitt 8 kann durch unterschiedliche Methoden, wie beispielsweise Kalt- oder Heißprägetechnologien, auf ein Objekt 10 aufgebracht werden, wobei das Objekt 10 auch ein zur Objektmarkierung 6 gehörendes Trägermaterial sein kann. Das zur Aufbringung 7 verwendete Verfahren ist hierbei vorwiegend durch die Beschaffenheit des Objekts 10 bzw. des Materialstücks 1, wie beispielsweise Hitzeempfindlichkeit oder Oberflächenstruktur, abhängig.

Eine erhöhte Sicherheit vor dem Kopieren mit Hilfe identischer Produktionsressourcen wird durch den Einsatz einer zufälligen Aufbringung 7 erreicht. Hierbei wird ein Bereich 9 des Materialstücks 1 willkürlich ausgewählt und der dem Bereich 9 entsprechende Ausschnitt 8 des Materialstücks 1 auf das Objekt 10 aufgebracht. Im Falle eines Kalt- oder Heißprägeverfahrens ist die Auswahl des Bereichs 9 und die Aufbringung 7 ein Prozessschritt. Hierbei liegt das Materialstück 1 in Form einer fortlaufenden Folie aus dem Basismaterial vor, wobei das Prägeverfahren die Positionierung des Materialstücks 1 nicht registriert, so dass der Bereich 9 durch einen willkürlichen Materialvorschub ausgewählt und der entsprechende Ausschnitt 8 auf das Objekt 10 aufgebracht wird.

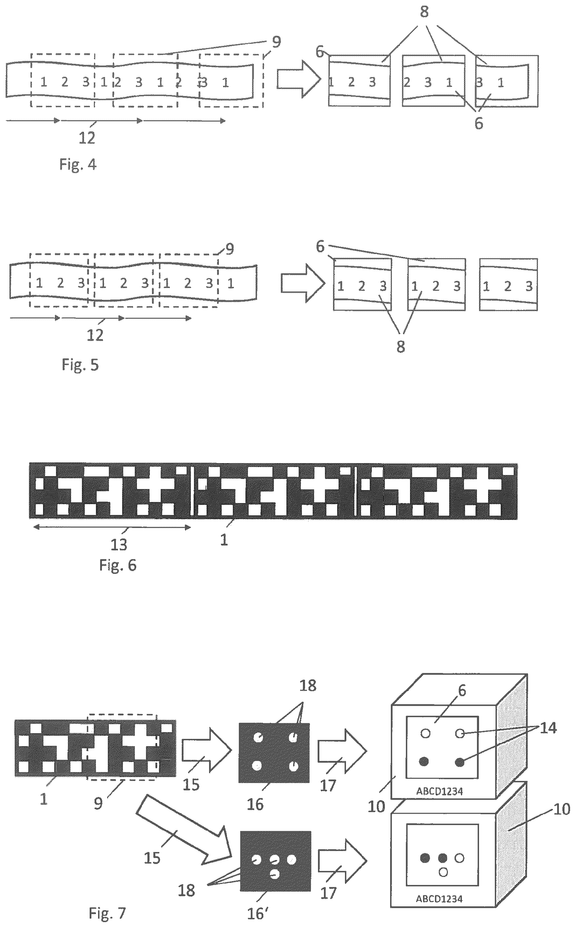

Damit die auf das Objekt 10 übertragenen Sicherheitsmerkmale 5' in Kombination mit einer eindeutigen Seriennummer 11 zur Authentifizierung herangezogen werden können, wird bei der Auswahl des Basismaterials darauf geachtet, dass die darauf befindlichen Sicherheitsmerkmale 5 eine hinreichend hohe Variation und eine die Abmessungen des Bereichs 9 übersteigende Periode aufweisen. Da derartige Materialien, wie beispielsweise Hologramme, in der Regel periodisch wiederkehrende Muster besitzen, kann eine ausreichend willkürliche Auswahl bei gegebener Periode durch die Wahl einer geeigneten Größe des Bereichs 9 sowie durch einen geeigneten Materialvorschub 12 (vgl. Fig. 4) erreicht werden.

Die tatsächliche Variation, also - vereinfacht gesagt - die Anzahl an herzustellenden Ausschnitten bis sich ein Muster wiederholt, wird durch das kleinste gemeinsame Vielfache aus der Periode des Musters des Basismaterials und der gewählten Größe des Materialvorschubs 12, 12' errechnet, sofern keine weiteren Maßnahmen zur Variation der Ausschnitte bzw. der Objektmarkierungen eingesetzt werden. Fig. 4 und 5 zeigt die möglichen Auswirkungen einer günstigen (Fig. 4) bzw. ungünstigen (Fig. 5) Wahl dieser Parameter. In Fig. 4 sind einige vorteilhafte Bereiche 9 des Materialstücks 1 angedeutet, welche durch einen variablen zufälligen Materialvorschub 12 ausgewählt werden und zu einer Variation der resultierenden Ausschnitte 8 und somit der Objektmarkierungen 6 führen. In Fig. 5 ist die ungünstigste mögliche Auswahl von Bereichen 9 des Materialstücks 1 dargestellt, wobei der Materialvorschub 12' genau der Periode der Sicherheitsmerkmale entspricht, sodass immer der gleiche Bereich ausgewählt wird und somit stets derselbe Ausschnitt 8 für die Herstellung der Objektmarkierungen 6 verwendet wird.

Bei den vom Betrachtungswinkel abhängigen Sicherheitsmerkmalen 5 und den optischen Eigenschaften des Basismaterials kann es sich um völlig unterschiedliche Muster oder um Variationen eines Musters bzw. Zeichens, beispielsweise durch Rotation oder perspektivischen Projektion desselben Musters, handeln. Der Einsatz von Rotation und Projektion bringt Vorteile bei der Speicherung der digitalen Objekteigenschaften, da hierbei durch eine bessere Komprimierbarkeit eine geringere Datenmenge benötigt wird.

Wenn die Periode des (unveränderten) Sicherheitsmerkmals relativ klein bzw. nur geringfügig größer als die Abmessungen der herzustellenden Objektmarkierung ist, d.h. wenn sich das Sicherheitsmerkmal (z.B. das Muster) auf dem Materialstück 1 in kurzen periodischen Abständen 13 wiederholt, wie in Fig. 6 dargestellt, wird mit den bisher beschriebenen Verfahren eine nur geringe Variation erreicht. Eine Erhöhung der Variation gelingt durch das in Fig. 7 schematisch dargestellte Verfahren zur Herstellung einer Objektmarkierung durch mehrere Ausschnitte 14 eines Materialstücks 1. Hierbei werden aus einem in einem ersten Schritt 15 ausgewählten Bereich 9 nur die einer Auswahlmaske 16 entsprechenden Ausschnitte 14 in einem zweiten Schritt 17 auf das Objekt 10 aufgebracht. Da eine statische Auswahlmaske 16 keine Verbesserung der Variation sondern lediglich eine kleinere Fläche derselben Auswahl zur Folge hat, wird das Entnahme-Muster 18 der Auswahlmaske 16 stetig verändert. Durch die variablen Auswahlmasken 16, 16' wird im Allgemeinen selbst bei identischer Auswahl des Bereichs 9 eine neue Kombination von Sicherheitsmerkmalen und somit unterschiedliche Objektmarkierungen 6 auf die Objekte 10 aufgebracht. Durch die unterschiedlichen Auswahlmasken 16 und 16' ist eine derartige Veränderung schematisch dargestellt, welche bei einem Prägeverfahren beispielsweise durch Rotation eines Stempels erzielt werden kann. Vorteilhafter ist der Einsatz von digitalen Prägeverfahren, wobei beispielsweise der Prägestempel dynamisch verändert wird oder das Haftmittel dynamisch aufgebracht wird.

Ein alternativ oder zusätzlich anwendbarer Ansatz zur dynamischen Auswahl mehrerer Ausschnitte 8 aus einem Materialstück 1, ohne dieses zu Zerteilen, ist der einer partiellen Abdeckung durch ein weiteres Material. Hierbei wird ein Materialabschnitt entsprechend dem gesamten ausgewählten Bereich 9 auf das Objekt 10 aufgebracht und von einem Abdeckmaterial mit der Form einer Auswahlmaske 16 überlagert. Als Abdeckmaterial kann beispielsweise eine Farbschicht dienen, welche durch ein digitales Druckverfahren aufgebracht wird. Die Überlagerung kann vor oder nach Auswahl des Materialabschnitts vorgenommen werden.

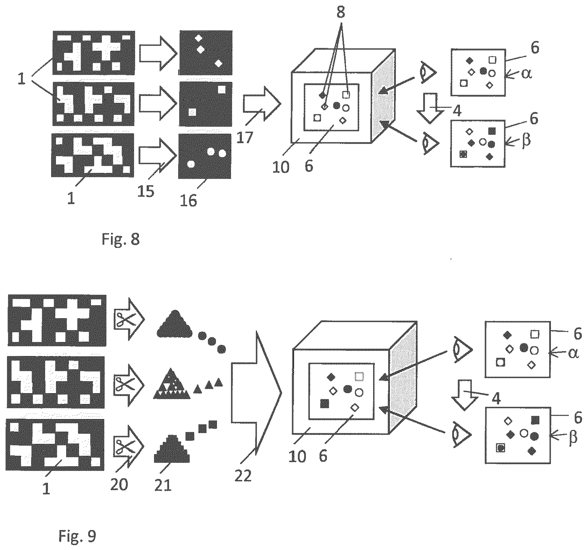

Eine weitere Erhöhung der Variationen und letztlich auch der Sicherheit ist durch das in Fig. 8 dargestellte Verfahren zur Herstellung einer Objektmarkierung 6 durch mehrere Ausschnitte 8 aus mehreren unabhängigen Materialstücken 1 möglich. Durch die Verwendung unterschiedlicher Basismaterialien bzw. Materialien mit unterschiedlichen Sicherheitsmerkmalen ist die erzielte Variation der resultierenden Objektmarkierung um ein Vielfaches höher und somit eine Kopie aufwendiger. Die den Ausschnitten 8 entsprechenden Sicherheitsmerkmale und somit die Objektmarkierung 6 weisen ein bei einer Änderung 4 des Blick- bzw. Betrachtungswinkels α, β unterschiedliches optisches Erscheinungsbild auf.

Die Variation der Sicherheitsmerkmale kann zudem durch eine mehrmalige Verwendung eines, d.h. ein und desselben, Materialstücks 1 erhöht werden. So weist beispielsweise ein bereits verwendetes Materialstück 1 Lücken auf, welche bei einer weiteren Verwendung Einfluss auf die resultierenden Ausschnitte 8 haben.

Des Weiteren ist eine Erhöhung der Variationen zudem durch Entnahmen von willkürlichen Ausschnitten vor der Auswahl eines Bereichs 9 bzw. der Aufbringung 7, 17 des gewählten Ausschnitts 8 des Materialstücks 1 möglich. So können beispielsweise willkürliche Muster aus einer Folie gestanzt werden bevor diese aufgebracht wird.

Darüber hinaus kann durch eine Variation der Position der Objektmarkierung 6 relativ zum Objekt 10 selbst oder einer auf dem Objekt 10 aufgebrachten Orientierungsmarkierung 19 (vgl. Fig. 3) eine weitere zur Authentifizierung verwendbare Eigenschaft eingeführt werden.

Die in Fig. 9 schematisch dargestellte indirekte Aufbringung ist ein alternatives Verfahren zur Herstellung einer Objektmarkierung im Rahmen der Erfindung. Hierbei wird in einem ersten Schritt 20 zumindest ein Materialstück 1 mit vom Betrachtungswinkel abhängigen optischen Eigenschaften bzw. Sicherheitsmerkmalen in kleine Teile bzw. Ausschnitte 21 zerteilt, welche in einem zweiten Schritt 22 willkürlich auf das Objekt 10 aufgebracht werden. Dies kann beispielsweise durch das Häckseln einer Hologrammfolie, der Vermengung der entstehenden kleinen Teile 21 mit einer flüssigen oder pastösen Trägermasse, wie z.B. einem Lack, und der Aufbringung der Trägermasse samt den kleinen Teilen 21 mit Hilfe eines Druckverfahrens umgesetzt werden. Um die Auslesbarkeit der so hergestellten Objektmarkierung mit Hilfe eines handelsüblichen programmierbaren Geräts mit einer Kamera zu ermöglichen, hat es sich als günstig herausgestellt, wenn die entstehenden kleinen Teile 21 einen minimalen Durchmesser von 100 µm aufweisen. Beispiele für geeignete Basismaterialien, welche vom Betrachtungswinkel abhängige Eigenschaften besitzen, sind: Hologramme, Lentikular-Materialien, Sägezahnfolien oder Folien zur Einschränkung des Betrachtungswinkels.

Eine erfindungsgemäße Variante des Verfahrens zur Herstellung einer Objektmarkierung mittels indirekter Aufbringung ist die Einarbeitung der Material-Teile bzw. Ausschnitte 21 zumindest eines Materialstücks 1 in eine Folie (nicht gezeigt), aus welcher Folie anschließend mindestens ein willkürlicher Bereich ausgewählt und ein entsprechender Ausschnitt der Folie auf das Objekt 10 aufgebracht wird.

Wird eine Aufbringung der Teile bzw. Ausschnitte 21 durch eine Einbettung in ein weiteres Material, d.h. ein Trägermaterial, mit ausreichender Materialstärke gewählt, können insbesondere auch Materialien eingesetzt werden, welche selbst keine vom Betrachtungswinkel abhängigen Eigenschaften besitzen. Dies begründet sich dadurch, dass die Teile 21 bei ausreichender Materialstärke des einbettenden bzw. umgebenden Materials unterschiedliche, d.h. im Allgemeinen nicht zur Objektoberfläche parallele Ausrichtungen aufweisen können, wodurch für die Gesamtheit der Anordnung vom Betrachtungswinkel abhängige Eigenschaften entstehen. Ein Beispiel hierfür sind Teile 21 aus einem reflektierenden Material, welches zerstückelt, z.B. gehäckselt, und in eine Folie eingearbeitet werden. Je nach Betrachtungswinkel weist die so hergestellte Folie somit unterschiedliche Reflexionseigenschaften auf.

## Patentansprüche

1. Verfahren zur Herstellung einer Objektmarkierung (6) zur optischen Authentifizierung eines Objekts (10), wobei zumindest ein Ausschnitt (8) eines Materialstücks (1) eines Basismaterials willkürlich bzw. zufällig festgelegt wird und mit dem zumindest einen Ausschnitt (8) die Objektmarkierung (6) hergestellt wird, **dadurch gekennzeichnet, dass** das Basismaterial des Materialstücks (1) ein periodisch wiederkehrendes Muster von Sicherheitsmerkmalen (5) mit vom Betrachtungswinkel abhängigen optischen Eigenschaften aufweist, dessen Periode größer als die Abmessungen des Ausschnitts (8), insbesondere größer als die Abmessungen der Objektmarkierung (6), ist, sodass jeder Ausschnitt (8) einzigartig ist und nur einen Teil des Musters von Sicherheitsmerkmalen (5) aufweist.

2. Verfahren nach Anspruch 1, **dadurch gekennzeichnet, dass** das Sicherheitsmerkmal (5) bzw. dessen optische Eigenschaften Abmessungen aufweist, welche mindestens dem Auflösungsvermögen des menschlichen Auges, insbesondere dem Auflösungsvermögen handelsüblicher Kameras, entsprechen, sodass das Sicherheitsmerkmal (5) mit einer handelsüblichen Kamera auslesbar und verifizierbar ist.

3. Verfahren nach Anspruch 1 oder 2, **dadurch gekennzeichnet, dass** das Materialstück (1) in Form eines Bandes ausgebildet ist und durch einen zufälligen bzw. nicht gesteuerten, bevorzugt von der Periode des periodisch wiederkehrenden Musters (5) des Basismaterials abweichenden, Vorlauf des Bandes eine Stelle des Bandes ausgewählt wird und der Ausschnitt (8) bezogen auf die ausgewählte Stelle festgelegt wird.

4. Verfahren nach einem der Ansprüche 1 bis 3, **dadurch gekennzeichnet, dass** der Ausschnitt (8) durch eine variable zufällige, Auswahlmaske (16, 16') festgelegt wird, wobei der Ausschnitt (8) entweder entsprechend einem durch die Auswahlmaske (16, 16') maskierten Bereich des Materialstücks (1) oder entsprechend einem durch die Auswahlmaske (16, 16') unmaskierten bzw. freigelassenen Bereich des Materialstücks (1) festgelegt wird.

5. Verfahren nach Anspruch 4, **dadurch gekennzeichnet, dass** die variable Auswahlmaske (16, 16') in Form einer partiellen Abdeckung auf das Materialstuck (1) aufgrbracht wird, insbesondere in Form einer stellen- bzw. gebietsweise aufgebrachten Schicht.

6. Verfahren nach einem der Ansprüche 1 bis 5, **dadurch gekennzeichnet, dass** vor der Herstellung der Objektmarkierung (6), vorzugsweise noch vor der Festlegung des Ausschnitts (8), zumindest ein willkürlich bzw. zufälling festgelegter Teil des Materialstücks (1) entnommen wird.

7. Verfahren nach einem der Ansprüche 1 bis 6, **dadurch gekennzeichnet, dass** zumindest ein weiterer Ausschnitt (8) desselben Materialstücks (1) oder eined weiteren Materialstücks (1) des Basismaterials willkürlich bzw. zufällig festgelegt wird und die Objektmarkierung (6) mit den zumindest zwei Ausschnitten (8) hergestellt wird, wobei die zumindest zwei Ausschnitte (8) vorzugsweise mit einer zumindest vorübergehend flüssigen oder pastösen Trägermasse vermengt werden, welche direkt oder indirekt auf das Objekt (10) aufgebracht wird.

8. Verfahren nach einem der Ansprüche 1 bis 7, **dadurch gekennzeichnet, dass** der zumindest eine Ausschnitt (8) zur Herstellung der Objektmarkierung (6) auf ein Trägermaterial aufgebracht wird.

9. Verfahren nach einem der Ansprüche 1 bis 8, **dadurch gekennzeichnet, dass** die Objektmarkierung (6) mit dem Objekt (10) verbunden wird, wobei die Objektmarkierung (6) bezüglich des Objekts (10) bzw. einer am Objekt (10) angebrachten Orientierungsmarke (19) variabel und zufälling angeordnet wird, wobei die durch die zufällige Anordnung der Objektmarkierung (6) entstehenden Eigenschaften vorzugsweise mit einer handelsüblichen Kamera feststellbar und auslesbar sind.

10. Verfahren nach einem der Ansprüche 1 bis 9, **dadurch gekennzeichnet, dass** das Sicherheitsmerkmal (5) des Basismaterials ein optisch variables Merkmal, insbesondere ein Hologramm, ist.

## Claims

1. A method of producing an object marking (6) for optically authenticating an object (10), wherein at last one section (8) of a piece of material of a base material is arbitrarily or randomly defined and the object marking (6) is produced with the at least one section (8), **characterised in that** the base material of the piece of material has a periodically recurring pattern of security features (6) with optical characteristics dependent on the viewing angle, the period of which is larger than the dimensions of the section (8), in particular larger than the dimensions of the object marking (6), so that each section (8) is unique and has only a portion of the pattern of security features (5).

2. A method as claimed in claim 1, **characterised in that** the security feature (5) or its optical characteristics has dimensions which correspond to at least the resolution capability of the human eye, in particular the resolution capability of commercially available cameras, so that the security feature (5) is readable and verifiable with a commercially available camera.

3. A method as claimed in claim 1 or 2, **characterised in that** the piece of material (1) is in the form of a strip and a position on the strip is selected by a random or non-controlled advance of the strip, preferably differing from the period of the periodically recurring pattern (5) on the base material, and the section (8) is defined with respect to the selected position.

4. A method as claimed in one of claims 1 to 3, **characterised in that** the section (8) is defined by a variable, random selection mask (16, 16'), wherein the section (8) is defined either corresponding to a region of the piece of material (1) masked by the selection mask (16, 16') or corresponding to a region of the piece of material (1) which is not masked or exposed by the selection mask (16, 16').

5. A method as claimed in claim 4, **characterised in that** the variable selection mask (16, 16') is applied to the piece of material in the form of a partial cover, in particular in the form of a layer which is applied in certain positions or regions.

6. A method as claimed in one of claims 1 to 5, **characterised in that** at least one arbitrarily or randomly defined portion of the piece of material (1) is removed before the production of the object marking, preferably even before the definition of the section (8).

7. A method as claimed in one of claims 1 to 6, **characterised in that** at least one further section (8) of the same piece of material (1) or of a further piece of material (1) of the base material is arbitrarily or randomly defined and the object marking (6) is produced with the at least two sections (8), wherein the at least two sections (8) are mixed preferably with an at least temporarily liquid or pasty carrier composition, which is applied directly or indirectly to the object (10.

8. A method as claimed in one of claims 1 to 7, **characterised in that** the at least one section (8) is applied to a carrier material for producing the object marking (6).

9. A method as claimed in one of claims 1 to 8, **characterised in that** the object marking (6) is connected to the object (10), wherein the object marking (6) is variably and randomly arranged with respect to the object (10) or an orientation mark (19) applied to the object, wherein the characteristics resulting from the random arrangement of the object marking are determinable and readable with a commercially available camera.

10. A method as claimed in one of claims 1 to 9, **characterised in that** the security feature (5) on the base material is an optically variable feature, in particular a hologram.

## Revendications

1. Procédé de production d'un marquage d'objet (6) pour l'authentification optique d'un objet (10), dans lequel au moins une découpe (8) d'une pièce de matériau (1) d'un matériau de base est définie arbitrairement ou fortuitement et le marquage d'objet (6) est produit au moyen de ladite au moins une découpe (8),
**caractérisé en ce que** le matériau de base de la pièce de matériau (1) présente un motif récurrent périodique de caractéristiques de sécurité (5) aux propriétés optiques dépendant de l'angle d'observation, dont la période est supérieure aux dimensions de la découpe (8), en particulier supérieure aux dimensions du marquage d'objet (6), de sorte que chaque découpe (8) est unique et ne présente qu'une partie du motif des caractéristiques de sécurité (5).

2. Procédé selon la revendication 1, **caractérisé en ce que** la caractéristique de sécurité (5) ou ses propriétés optiques présente(nt) des dimensions correspondant au moins au pouvoir de résolution de l'œil humain, en particulier à la résolution des caméras du commerce, de sorte que la caractéristique de sécurité (5) peut être lue et vérifiée au moyen d'une caméra du commerce.

3. Procédé selon la revendication 1 ou 2, **caractérisé en ce que** la pièce de matériau (1) est réalisée sous la forme d'une bande et un endroit de la bande est sélectionné par une avance fortuite ou non commandée de la bande, de préférence différente de la période du motif récurrent périodique (5) du matériau de base, et la découpe (8) est définie par rapport à l'endroit sélectionné.

4. Procédé selon l'une quelconque des revendications 1 à 3, **caractérisé en ce que** la découpe (8) est définie par un masque de sélection (16, 16') fortuit variable, dans lequel la découpe (8) est définie soit en fonction d'une zone de la pièce de matériau (1) masquée par le masque de sélection (16, 16') soit en fonction d'une zone de la pièce de matériau (1) non masquée par le masque de sélection (16, 16') ou laissée à découvert.

5. Procédé selon la revendication 4, **caractérisé en ce que** le masque de sélection variable (16, 16') est appliqué sur la pièce de matériau (1) sous la forme d'un cache partiel, en particulier sous la forme d'une couche appliquée par endroits ou par zones.

6. Procédé selon l'une quelconque des revendications 1 à 5, **caractérisé en ce qu'**au moins une partie de la pièce de matériau (1) définie arbitrairement ou fortuitement est retirée avant la production du marquage d'objet (6), de préférence encore avant la définition de la découpe (8).

7. Procédé selon l'une quelconque des revendications 1 à 6, **caractérisé en ce qu'**au moins une autre découpe (8) de la même pièce de matériau (1) ou d'une autre pièce de matériau (1) du matériau de base est définie arbitrairement ou fortuitement et le marquage d'objet (6) est produit au moyen desdites au moins deux découpes (8), dans lequel les au moins deux découpes (8) sont mélangées de préférence à une masse de support au moins temporairement liquide ou pâteuse, laquelle est appliquée directement ou indirectement sur l'objet (10).

8. Procédé selon l'une quelconque des revendications 1 à 7, **caractérisé en ce que** la au moins une découpe (8) est appliquée sur un matériau de support pour produire le marquage d'objet (6).

9. Procédé selon l'une quelconque des revendications 1 à 8, **caractérisé en ce que** le marquage d'objet (6) est relié à l'objet (10), dans lequel le marquage d'objet (6) est mis en place de manière variable ou fortuite par rapport à l'objet (10) ou à une marque d'orientation (19) placée sur l'objet (10), dans lequel les propriétés obtenues par la mise en place fortuite du marquage d'objet (6) peuvent être lues et définies de préférence au moyen d'une caméra du commerce.

10. Procédé selon l'une quelconque des revendications 1 à 9, **caractérisé en ce que** la caractéristique de sécurité (5) du matériau de base est une caractéristique optiquement variable, en particulier un hologramme.
